# EUROPÄISCHE PATENTANMELDUNG

(11) **EP 4 198 789 A1**
(43) Veröffentlichungstag der Anmeldung: **21.06.2023**
(21) Anmeldenummer: 22188581.7
(22) Anmeldetag: 03.08.2022
(51) Int. Cl.: G06F 21/72, G06F 21/86

(54) **DATENVERARBEITUNGSSYSTEM ZUM VERARBEITEN VERTRAULICHER DATEN**

(71) Anmelder: Siemens Aktiengesellschaft, 80333 München (DE)
(72) Erfinder: Garcia, Ricardo, 90403 Nürnberg (DE); Kroiß, Sebastian, 92318 Neumarkt (DE); Kraus, Robert, 91336 Heroldsbach (DE); Almosdörfer, Stefan, 90763 Fürth (DE); Engert, Stefan, 90763 Fürth (DE)
(74) Vertreter: Siemens Patent Attorneys

(57) **Zusammenfassung**

Die Erfindung betrifft ein Datenverarbeitungssystem (100) ausgestaltet zum Verarbeiten und Speichern vertraulicher Daten (VS) wobei eine
- erste Zone (1) als ein Computergrundsystem (10) mit den Peripherie-Schnittstellen (USB,DP) ausgestaltet ist und eine
- zweite Zone (2) als eine Modulaufnahme (21) ausgestaltet ist und in die Modulaufnahme (21) ein Modul (20) gesteckt ist, in welchem die vertraulichen Daten (VS) gespeichert und verarbeitet werden,
- wobei das Modul (20) zur Wahrung der Vertraulichkeit als eine geschlossene Funktionseinheit (22) ausgestaltet ist und mit Mitteln (EMV) versehen ist, die zum einen eine Aussendung elektromagnetischer Wellen unterbinden und zum anderen eine galvanische Trennung zwischen der ersten Zone (1) und der zweiten Zone (2) gewährleisten,
- wobei das Modul (20)
- eine optisch ausgelegte Netzwerkschnittstelle (LWL),
- einen galvanisch getrennten DC/DC-Wandler (30) oder einen Spannungsanschluss an einen galvanisch getrennten DC/DC-Wandler (30) oder eine EMV-gerechte Befilterung zur Spannungsversorgung über das Computergrundsystem (10) und
- einen Anschluss (32) für einen optisch ausgelegten Kommunikationsbus (PCI) zwischen dem Computergrundsystem (10) und dem Modul (20) aufweist,

- wobei das Modul (20) eine abstrahlgeprüfte Komponente mit einer zertifizierten Zulassungsmessung ist.

## Beschreibung

Datenverarbeitungssystem ausgestaltet zum Verarbeiten und Speichern vertraulicher, insbesondere streng vertraulicher Daten umfassend eine Hauptplatine mit Elementen zur Steuerung über eine Mehrzahl an Peripherieschnittstellen angeschlossene Hardware und Peripheriegeräte

Bei Datenverarbeitungssystemen, welche ausgestaltet sind zur Wahrung der Vertraulichkeit von Daten, muss folgendes berücksichtigt werden. Jedes elektrisch betriebene, datenverarbeitende Gerät sendet elektromagnetische Strahlung aus. Dies gilt somit gleichermaßen für z.B. Analog-Telefone und elektrische Schreibmaschinen wie für elektronische Geräte aller Art, also u.a. auch für Fotokopierer und Telefaxe, sowie für alle IT-Geräte wie Bildschirme, Computer, Router etc..

Für die Wahrung der Vertraulichkeit sind nun jene Anteile der Abstrahlung eines VS-verarbeitenden Gerätes als kritisch zu betrachten, welche "klare", also unkryptierte Informationen enthalten. Können aus diesen Anteilen die VS-Informationen rekonstruiert werden, bezeichnet man das als kompromittierende Abstrahlung. VS bedeutet Verschluss-Sache.

Ob ein potenzieller Angreifer aus der kompromittierenden Abstrahlung verwertbare Informationen abschöpfen kann, hängt wesentlich von der Intensität der kompromittierenden Abstrahlung am Ort des Angreifers ab.

Eine Abstrahlprüfung ist stets eine Risikoabschätzung, bei der nach bestimmten Kriterien passende Maßnahmen zur Minimierung von Kompromittierungsrisiken ermittelt werden.

Bei bestehenden Produkten muss jede Systemkonfiguration einzeln zugelassen und dann jedes Produkt vermessen werden und darf im Feld nicht mehr verändert werden. Wird eine der verwendeten Komponenten geändert und somit der Gegenstand verändert, so handelt es sich um ein neues Produkt ohne Zulassung. Damit ist eine neue Entwicklung der Abstrahlschutzmaßnahmen für die geänderte Komponente erforderlich, welche die Prüfung der Abstrahlsicherheit im Zusammenspiel mit den übrigen Komponenten des Originalproduktes erfordert.

Demnach muss eine komplette Systemkonfiguration abstrahlgeprüft werden und darf dann nicht mehr verändert werden bzw. es dürfen Komponenten nicht mehr ausgetauscht werden. Da ein Austauschen oder eine Veränderung immer wieder eine erneute Abstrahlprüfung erfordert, ist es Aufgabe der vorliegenden Erfindung bei einem Datenverarbeitungssystem ausgestaltet zum Verarbeiten und Speichern von vertraulicher Daten, dieses System so aufzubauen, dass im Feld an das Gerät beliebige Peripherie angeschlossen werden kann und Teile von der Hauptplatine auch ausgetauscht werden können ohne den Abstrahlschutz zu kompromittieren bzw. eine neue Abstrahlprüfung und damit eine neue Zulassung für das Gerät zu erhalten bzw. durchzuführen.

Für das eingangs genannte Datenverarbeitungssystem wird die Aufgabe dadurch gelöst, dass die Hauptplatine in zwei Zonen nämlich in eine erste Zone und eine zweite Zone aufgeteilt ist, wobei die erste Zone als ein Computergrundsystem mit den Peripherie-Schnittstellen ausgestaltet ist und die zweite Zone als eine Modulaufnahme ausgestaltet ist und in die Modulaufnahme ein Modul gesteckt ist, in welchem die vertraulichen Daten gespeichert und verarbeitet werden, wobei das Modul zur Wahrung der Vertraulichkeit als eine geschlossene Funktionseinheit ausgestaltet ist und mit Mitteln versehen ist, die zum einen eine Aussendung elektromagnetischer Wellen unterbinden und zum anderen eine galvanische Trennung zwischen der ersten Zone und der zweiten Zone gewährleisten, wobei das Modul eine oder mehrere optisch ausgelegte Netzwerkschnittstelle, einen galvanisch getrennten DC/DC-Wandler oder einen Spannungsanschluss an einen galvanisch getrennten DC/DC-Wandler oder eine EMV-gerechte Befilterung zur Spannungsversorgung über das Computergrundsystem und einen Anschluss für einen optisch ausgelegten Kommunikationsbus zwischen dem Computergrundsystem und dem Modul aufweist, wobei das Modul eine abstrahlgeprüfte Komponente mit einer zertifizierten Zulassungsmessung ist.

Erfindungsgemäß wird das Gerät in zwei Zonen eingeteilt, eine Zone beinhaltet die schützenswerten Geheimnisse und eine andere Zone weist ein Standard-Computergrundsystem auf. Die Zone mit den schützenswerten Geheimnissen wird abstrahlgeprüft und vom Rest des Gerätes, nämlich dem Standard-Computersystem galvanisch bzw. optisch getrennt. Die Komponenten im restlichen Gerät können somit getauscht werden, ohne den Abstrahlschutz zu kompromittieren. Es ist demnach immer nur eine Abstrahlprüfung von einer schützenswerten Subkomponente, nämlich dem Modul, notwendig und nicht mehrere Abstrahlprüfungen aller Systemkonfigurationen. Zusätzlich dazu können im Feld an das Datenverarbeitungssystem beliebige Peripherie angeschlossen werden, ohne den Abstrahlschutz zu kompromittieren. Die schützenswerte Zone wird als ein Gerät im Gerät realisiert, welches einzeln abstrahlgeprüft wird und danach in das Gesamtgerät eingebaut wird.

Im Sinne der Erfindung ist unter Elementen zur Steuerung beispielsweise ein CPU-Sockel mit einem Prozessor, ein ATX-Stromanschluss, ein oder mehrere RAM-Steckplätze, ein SATA-Anschluss, eine Northbridge, eine Southbridge, mehrere PCIe-AGP-Steckplätze, ein oder mehrere PCI-Steckplätze, eine BOIS-Batterie und Peripherie-Anschlüsse zu verstehen.

In einer weiterführenden Ausgestaltung ist das Modul ausgestattet als ein Gateway zur verschlüsselten Kommunikation mit weiteren Datenverarbeitungssystemen und weist eine Zertifikate-Einheit und eine Verschlüsselungs-Einheit auf.

In dem Datenverarbeitungssystem stellt das Modul als ein Gateway eine Brücke zur Kommunikation zwischen mehreren internen und/oder auch externen Netzwerkabschnitten dar, an welchem wiederum weitere Datenverarbeitungssysteme angeschlossen sind oder sein können. Das Modul sorgt dabei für sichere kryptografische Verbindungen im Sinne eines VPN-Tunnels zu den anderen Datenverarbeitungssystemen, welche vorzugsweise auch wiederum ein derartiges Modul aufweisen.

Eine Absicherung der Geheimnisse wird weiterhin verbessert wenn das Modul als ein Kryptographie-Modul mit einer Schnittstelle zum Computergrundsystem auf der Hauptplatine ausgestaltet ist. Das Modul realisiert demnach eine Systemanbindung als eine Schnittstelle zwischen dem Modul, also dem Kryptographie-Modul und einer Hardwareplattform, also dem Computergrundsystem, auf welchen wiederum offene Systemdaten kommuniziert werden können.

Das Datenverarbeitungssystem weist vorteilhafterweise einen Chip-Kartenleser auf, wobei das Kryptographie-Modul ausgestaltet ist in Wechselwirkung mit einer gesteckten Chip-Karte einen Betrieb und eine Konfiguration zuzulassen.

Mit beispielsweise einer gesteckten Smartkarte als Chip-Karte kann das Kryptographie-Modul konfiguriert und betrieben werden.

Sollte ein Angriff in Anwesenheit eines Benutzers festgestellt werden, so kann der Benutzer mit einer Notlöschtaste, die geheimen Daten auf den Datenverarbeitungssystem löschen. Dazu weist das Datenverarbeitungssystem eine Notlöschtaste auf, welche mit einen Lösch-Algorithmus verschaltet ist, wobei der Lösch-Algorithmus ausgestaltet ist, die vertraulichen Daten zu löschen. In der Regel löscht die Notlöschtaste nur das Geheimnis auf dem Kryptographie-Modul.

Insbesondere für die Kommunikation mit anderen Datenverarbeitungssystemen ist die optisch ausgelegte Netzwerkschnittstelle derart ausgestaltet, dass ein Fernwartungsmodul oder ein Fernwartungsdienst, insbesondere eine Intel Active Management Technology, blockiert wird.

Zur Erhöhung der Sicherheit könnte die optisch ausgelegte Netzwerkschnittstelle derart ausgestaltet sein, dass eine erste Netzwerkschnittstelle und eine zweite Netzwerkschnittstelle vorhanden ist, diese sind derart ausgestaltet, dass Daten ausschließlich in eine Richtung übertragen werden, nämlich von der ersten Netzwerkschnittstelle zu der zweiten Netzwerkschnittstelle, in der umgekehrten Richtung wird der Abfluss von Informationen dagegen konsequent verhindert. In der Fachwelt versteht man unter der ersten Schnittstelle auch eine schwarze Schnittstelle und unter der zweiten Schnittstelle eine rote Schnittstelle. Mit dieser Technologie ist sichergestellt, dass grundsätzlich an der Netzwerkschnittstelle keine als sicherheitskritisch eingestuften Daten aus einem roten in ein schwarzes Netz gelangen können. Ein zusätzliches wichtiges Merkmal einer sogenannten Datendiode (VS-Diode) ist aber auch eine hohe Performance und Zuverlässigkeit bei einer Einbahn-Datenübertragung.

Eine Kommunikation in beide Richtungen ist bei einer Entschlüsselung und Verschlüsselung aber auch möglich.

Die Zeichnung zeigt ein Ausführungsbeispiel der Erfindung und dabei zeigt:
- FIG 1: ein Blockschaltbild eines Datenverarbeitungssystems und
- FIG 2: eine perspektivische gegenständliche Darstellung des Datenverarbeitungssystems.

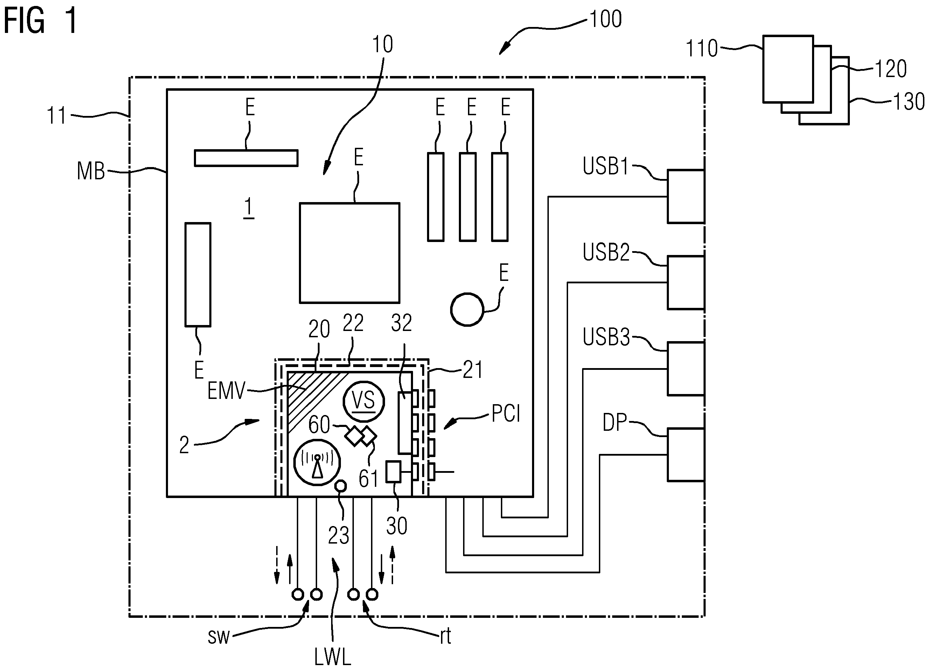

Gemäß FIG 1 ist ein Datenverarbeitungssystem 100 ausgestaltet zum Speichern und Verarbeiten vertraulicher Daten VS dargestellt.

Das Datenverarbeitungssystem 100 umfasst eine Hauptplatine MB mit Elementen E zur Steuerung über eine Mehrzahl an Periphere-Schnittstellen USB,DP angeschlossener Hardware und Peripherie-Geräte auf. Die Hardware und die gesonderten Peripherie-Geräte können über eine erste USB-Schnittstelle USB1, eine zweite USB-Schnittstelle USB2, eine dritte USB-Schnittstelle USB3 und eine Display-Port-Schnittstelle DP angeschlossen werden. Über die erste USB-Schnittstelle USB1 kann beispielsweise eine Tastatur und über die zweite USB-Schnittstelle USB2 kann beispielsweise eine Maus angeschlossen werden. Über die Display-Port-Schnittstelle DP ist oder kann beispielsweise ein Monitor angeschlossen werden.

Wesentlich für die Erfindung ist, dass die Hauptplatine nun in eine erste Zone 1 und eine zweite Zone 2 aufgeteilt ist. Die erste Zone 1 ist als ein Computergrundsystem 10 mit dem Periphere-Schnittstellen USB,DP ausgestaltet und die zweite Zone 2 ist als eine Modulaufnahme 21 ausgestaltet und in die Modulaufnahme 21 ist ein Modul 20 gesteckt, in welchen die vertraulichen Daten VS gespeichert und verarbeitet werden.

Das Modul 20 ist zur Wahrung der Vertraulichkeit als eine geschlossene Funktionseinheit 22 ausgestaltet und ist mit Mitteln EMV versehen, die zum einen eine Aussendung elektromagnetischer Wellen unterbinden und zum anderen eine galvanische Trennung zwischen der ersten Zone 1 und der zweiten Zone 2 gewährleisten.

Das Modul 20 weist eine optische ausgelegte Netzwerkschnittstelle LWL auf. Damit das Modul 20 über die erste Zone 1 hinweg in die zweite Zone 2 mit dem Computergrundsystem 10 kommunizieren kann, weist das Modul 20 einen Anschluss 32 für einen optisch ausgelegten Kommunikationsbus PCI zwischen dem Computergrundsystem 10 und dem Modul 20 auf. Für eine Spannungsversorgung des Moduls 20 ist ein galvanisch getrennter DC/DC-Wandler 30 zur Spannungsversorgung über das Computergrundsystem 10 in dem Modul 20 integriert. Das Modul 20 zur Wahrung der Vertraulichkeit ist einmalig als eine geschlossene Funktionseinheit 22 abstrahlgeprüft und wurde als abstrahlgeprüfte Komponente mit einer zertifizierten Zulassungsmessung zugelassen.

Das Modul 20 ist weiterhin ausgestaltet als ein Gateway 23 zu fungieren, wobei das Modul zur verschlüsselten Kommunikation über das Gateway 23 mit weiteren Datenverarbeitungssystemen 110,120,130 mit einer Zertifikate-Einheit 60 und einer Verschlüsselungseinheit 61 ausgestaltet ist. Weiterhin ist das Modul 20 als ein Kryptographie-Modul mit einer Schnittstelle zum Computergrundsystem 10 auf der Hauptplatine MB ausgestaltet. Es ist eine Systemanbindung auf dem Modul 20 ausgeführt, welche eine Schnittstelle zwischen dem Modul 20 und einer Hardwareplattform unter Kryptographie-Bedingungen darstellt.

Eine weitere Ausgestaltung, insbesondere bei der Benutzung als ein Gateway 23 ist die optisch ausgelegte Netzwerkschnittstelle LWL als eine erste Netzwerkschnittstelle sw und eine zweite Netzwerkschnittstelle rt ausgestaltet. Diese Ausgestaltung sieht vor, dass Daten ausschließlich in eine Richtung übertragen werden, nämlich von der ersten Netzwerkschnittstelle sw zu der zweiten Netzwerkschnittstelle rt, in der umgekehrten Richtung wird der Abfluss von Informationen dagegen konsequent verhindert.

So ist sichergestellt, dass an der Netzwerkschnittstelle LWL keine als sicher eingestuften Daten aus beispielsweise einem roten Netzwerk in ein schwarzes Netzwerk gelangen können. Dieses wird durch eine Datendiode (VS-Diode) realisiert. Wenn es eine geforderte Sicherheitsstufe zulässt, kann durch geeignete Ver- und Entschlüsselung auch wieder ein Datenverkehr in beide Richtungen zugelassen werden.

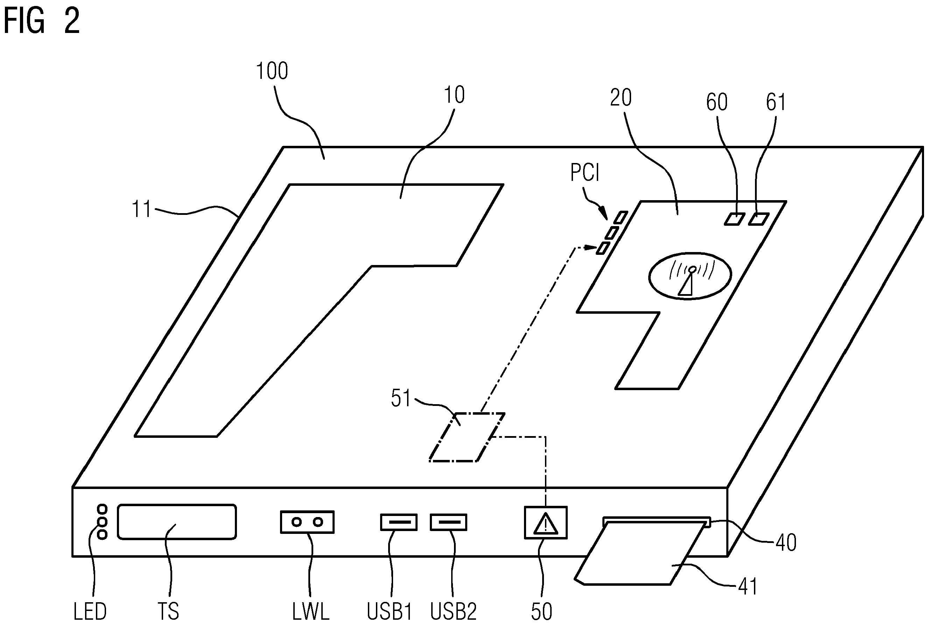

Mit der FIG 2 ist das Datenverarbeitungssystem 100 als ein mit einem Gehäuse 11 ausgeführtes Einschubsystem dargestellt. In einer Front weist das Datenverarbeitungssystem 100 Status-LED's, einem Touchscreen TS, die Netzwerkschnittstelle LWL, die erste USB-Schnittstelle USB1 und die zweite USB-Schnittstelle USB2, eine Notlöschtaste 50, und einen Chip-Kartenleser 40 für eine Chip-Karte 41 auf.

Die Netzwerkschnittstelle LWL ist so ausgestaltet, dass ein Fernwartungsmodul oder ein Fernwartungsdienst mit einer Intel Active Management Technology ATM blockiert wird.

Die Notlöschtaste 50 ist mit einem Löschalgorithmus 51 verbunden der wiederum in einem Notlöschfall auf das Modul 20 wirkt und insbesondere die vertraulichen Daten VS oder bestimmte Zertifikate und Kryptographie-Schlüssel löscht. Demnach würde nach Drücken der Notlöschtaste 50 die Zertifikateeinheit 60 und die Verschlüsselungseinheit 61 stillgelegt werden.

Das Modul 20 kommuniziert mit den Computergrundsystem 10 über einen optischen PCI-Bus.

## Patentansprüche

1. Datenverarbeitungssystem (100) ausgestaltet zum Verarbeiten und Speichern vertraulicher Daten (VS) umfassend eine Hauptplatine (MB) mit Elementen (E) zur Steuerung von über eine Mehrzahl an Peripherie-Schnittstellen (USB,DP) angeschlossener Hardware und Peripheriegeräte,
**dadurch gekennzeichnet, dass** die Hauptplatine (MB) in zwei Zonen (1,2) nämlich in eine erste Zone (1) und in eine zweite Zone (2) aufgeteilt ist, wobei die
- erste Zone (1) als ein Computergrundsystem (10) mit den Peripherie-Schnittstellen (USB,DP) ausgestaltet ist und die
- zweite Zone (2) als eine Modulaufnahme (21) ausgestaltet ist und in die Modulaufnahme (21) ein Modul (20) gesteckt ist, in welchem die vertraulichen Daten (VS) gespeichert und verarbeitet werden,
- wobei das Modul (20) zur Wahrung der Vertraulichkeit als eine geschlossene Funktionseinheit (22) ausgestaltet ist und mit Mitteln (EMV) versehen ist, die zum einen eine Aussendung elektromagnetischer Wellen unterbinden und zum anderen eine galvanische Trennung zwischen der ersten Zone (1) und der zweiten Zone (2) gewährleisten,
- wobei das Modul (20)
- eine oder mehrere optisch ausgelegte Netzwerkschnittstellen (LWL),
- einen galvanisch getrennten DC/DC-Wandler (30) oder einen Spannungsanschluss an einen galvanisch getrennten DC/DC-Wandler (30) oder eine EMV-gerechte Befilterung zur Spannungsversorgung über das Computergrundsystem (10) und
- einen Anschluss (32) für einen optisch ausgelegten Kommunikationsbus (PCI) zwischen dem Computergrundsystem (10) und dem Modul (20) aufweist,
- wobei das Modul (20) eine abstrahlgeprüfte Komponente mit einer zertifizierten Zulassungsmessung ist.

2. Datenverarbeitungssystem (10) nach Anspruch 1,
wobei das Modul (20) als ein Gateway (23) zur verschlüsselten Kommunikation mit weiteren Datenverarbeitungssystemen (110,120,130) ausgestaltet ist und eine Zertifikate-Einheit (60) und eine Verschlüsselungseinheit (61) aufweist.

3. Datenverarbeitungssystem (10) nach Anspruch 1 oder 2, wobei das Modul (20) als ein Kryptografie-Modul mit einer Schnittstelle zum Computergrundsystem (10) auf der Hauptplatine (MB) ausgestaltet ist.

4. Datenverarbeitungssystem (10) nach Anspruch 3, mit einem Chip-Kartenleser (40), wobei das Kryptografie-Modul ausgestaltet ist in Wechselwirkung mit einer gesteckten Chip-Karte (41) einen Betrieb und eine Konfiguration zuzulassen.

5. Datenverarbeitungssystem (10) nach einem der Ansprüche 1 bis 4, aufweisend eine Notlöschtaste, welche mit einem Löschalgorithmus (51) verschaltet ist, wobei der Löschalgorithmus (51) ausgestaltet ist die vertraulichen Daten (VS) zu löschen.

6. Datenverarbeitungssystem (10) nach einem der Ansprüche 1 bis 5, wobei die optisch ausgelegte Netzwerkschnittstelle (LWL) derart ausgestaltet ist, dass ein Fernwartungsmodul oder Fernwartungs-Dienst, insbesondere eine Intel Active Management Technology, blockiert wird.

7. Datenverarbeitungssystem (10) nach einem der Ansprüche 1 bis 6, wobei die optisch ausgelegte Netzwerkschnittstelle (LWL) als eine erste Netzwerkschnittstelle (sw) und eine zweite Netzwerkschnittstelle (rt) ausgestaltet ist, das Daten ausschließlich in eine Richtung übertragen werden, nämlich von der ersten Netzwerkschnittstelle (SW) zu der zweiten Netzwerkschnittstelle (rt), in der umgekehrten Richtung wird der Abfluss von Informationen dagegen konsequent verhindert.
